# EUROPEAN PATENT SPECIFICATION

(11) **EP 1 394 969 B1**
(45) Date of publication and mention of the grant of the patent: **12.05.2004**
(21) Application number: 02360249.3
(22) Date of filing: 30.08.2002
(51) Int. Cl.: H04B 10/155

(54) **Electronic equaliser for optical transmitter**
Elektronischer Entzerrer für optischen Sender
Egaliseur électronique pour émetteur optique

(43) Date of publication of application: 03.03.2004
(73) Proprietor: ALCATEL, 75008 Paris (FR)
(72) Inventor: Wedding, Berthold Dr., 70825 Korntal-Münchingen (DE)
(74) Representative: Brose, Gerhard

(56) References cited:
- EP-A- 1 204 228
- WO-A1-02/14934
- US-A- 5 132 639
- US-A- 5 327 279
- US-A- 5 812 294

## Description

### Technical Field of the Invention

The present invention relates generally to a method for electronic equalizing an optical transmitter.

### Prior Art

He state of art comprises a well known modulator driver amplifier with slope compensation, e.g. Amplifier SHF 806P from SHF Communication Technologies AG with a positive gain slope option up to 3 dB [1].

The US 2002/0054726 [2] discloses a method of modifying the spectral distribution of an optical signal including the steps of splitting the signal among a plurality of optical paths, delaying the propagation of the optical signal through one or more of the optical paths by a time duration and then recombining those optical outputs.
It is also known from US 5,132,639 that an electronic signal might be pre-distorted to compensate a inherent distortion of a device. A distorsion generator is applied to simulate a counter signal to the distorted original signal.

### Background of the invention

The equalization of the frequency-response of electro-optical transmitter devices, especially of external optical modulators (e.g. LiNbO3) at high bit rates (e.g. 43Gbit/s), due to the following problem: The modulator usually shows a low-pass behavior.

### Summary of the invention

It is therefore an object of the present invention to provide a method for electronic equalizing an optical transmitter avoiding the low-pass behavior described above. This can be equalized by a suitable high-pass filter.

The present invention recognizes the possibility that all of mentioned functions can be performed by substantially the same circuitry.

### Detailed Description

Part of the invention is a method for electronic equalizing an optical transmitter comprising the following steps.
In a first step an electronic signal is split in a first electronic signal and a second electronic signal. In a next step one of the signals, being split, is delayed. The signals are then combined, wherein one signal is attenuated. The so combined signal is passed to the optical transmitter.

The peak-frequency of the equalizer is adjusted with the delay of the delayed signal and the amount of peaking is adjusted with the degree of attenuation.

The preferred embodiments of the invention are set forth in the dependent claims.

In the first preferred embodiment the splitting is done by an amplifier. Other splitting devices may also be used. Furthermore the combining of the first electronic signal and the second electronic signal is done by a power combiner.
The combining can also be achieved by a directional coupler.

An other part of the present invention is a circuitry implementing the above mentioned method. In the preferred embodiment the circuitry for electronic equalizing an optical transmitter comprises a splitter splitting an electronic signal in a first electronic signal and a second electronic signal, means for delaying one of said first signal or said second signal, means for combining said first signal and said second signal, wherein one signal is attenuated, and an optical transmitter being influenced by said combined signal.

The technical implementations have been described above.

The means for delaying one of said first signal or said second signal are electrical transmission lines.

The invention improves the optical output signals of the transmitter, leading to a better performance of the transmission system. Another advantage is that the signals can be transmitted over a longer distance. Both signals of a differential stage are used to increase the output amplitude at high frequencies.

Although no multiple referenced claims are drawn, all reasonable combinations of the features in the claims shall be disclosed.

### Description of the drawings

For a more complete understanding of the present invention, reference is established to the following description made in connection with accompanying drawings in which:
Fig. 1 shows a principle schema of an electronic equalizer for optical transmitter; (can also be used as hybrid realisation of the principle)
Fig. 2 shows an alternative hybrid embodiment using microwaves components;
Fig. 3 a-b show two possible embodiments, that can be integrated using an on-chip delay line.

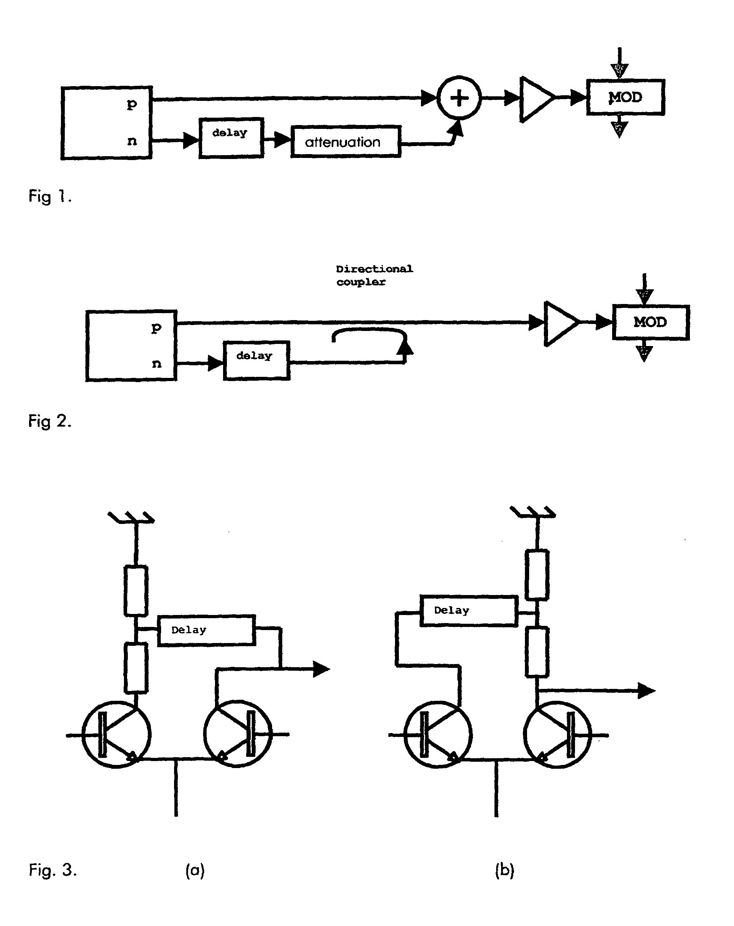

Figure 1 shows a principle schema of an electronic equalizer for an optical transmitter. Two electronic signals p and n of a differential output stage (e.g. of a 43 Gbit/s multiplexer) are combined e.g. with a power combiner. One signal, here e.g. signal n, is delayed and attenuated. The peak-frequency of the equalizer is adjusted with the delay line. A delay that corresponds to a phase retardation of PI Rad is required for the peak frequency. The amount of peaking is adjusted with the attenuation in one signal path.

Figure 2 shows an alternative hybrid realization using microwaves components, wherein the signals are combined by a directional coupler. A high output voltage can by achieved due to the low insertion loss of the directional coupler (typically < 2dB in comparison with the power combiner with insertion loss of 6 dB).

Figure 3a, Figure 3b show the out put stage of a differential amplifier, where the delay line as well as the means for attenuation of one signal (here signal "n") is also integrated. This version is advantageous for a fully integrated realisation since the delay line can also be integrated as a transmission line on the chip.

## Claims

1. A method for electronic frequency response equalizing an optical transmitter **characterized by**
- splitting an electronic signal in to a first electronic signal (n) and a second electronic signal (p),
- delaying one of said first electronic signal (n) or said second electronic signal (p),
- combining said first electronic signal (n) and said second electronic signal (p), wherein one signal is attenuated and one signal has been delayed,
- using the resulting combined signal, to drive the optical transmitter.

2. The method according to the previous claim, wherein said first electronic signal and said second electronic signal are combined with a power combiner.

3. The method according to claim 1, wherein said first electronic signal and said second electronic signal ore combined with a directional coupler.

4. The method according to claim 1, wherein a peak-frequency of the equalizer is adjusted in accordance with the delay of the delayed signal.

5. The method according to claim 1, wherein an amount of peaking of the equalizer is adjusted in accordance with the degree of attenuation.

6. The method according to claim 1, wherein the splitting is done by a differential amplifier.

7. A circuitry for electronic equalizing the frequency response of an optical transmitter comprising
- a splitter splitting an electronic signal in to a first electronic signal and a second electronic signal,
- means for delaying one of said first electronic signal or said second electronic signal,
- means for combining said first electronic signal and said second electronic signal, wherein one signal is attenuated, and one signal has been delayed,
- the optical transmitter being modulated by said combined signal.

8. The circuitry according to the previous circuitry claim, wherein the means for combining said first electronic signal and said second electronic signal is a power combiner or a directional coupler.

9. The circuitry according to claim 7, wherein a peak-frequency of the equalizer is adjusted the delay of said delayed signal and/or wherein an amount of peaking of the equalizer is adjusted the degree of attenuation.

10. The circuitry according to claim 7, wherein the splitter is a differential amplifier.

11. The circuitry according to claim 7, wherein the means for delaying one of said first electronic signal or said second electronic signal is an electronic delay line integrated on a chip together with a differential amplifier.

12. An apparatus for electronic equalizing an optical transmitter comprising a circuitry according to one or more of claims 7 to 12.

## Patentansprüche

1. Ein Verfahren zur elektronischen Entzerrung des Frequenzgangs eines optischen Senders, **gekennzeichnet durch** folgende Schritte:
- Aufteilung eines elektronischen Signals in ein erstes elektronisches Signal (n) und ein zweites elektronisches Signal (p),
- Verzögerung eines der ersten elektronischen Signale (n) oder zweiten elektronischen Signale (p),
- Kombination des ersten elektronischen Signals (n) und des zweiten elektronischen Signals (p), wobei ein Signal gedämpft wird und ein Signal verzögert wurde,
- Verwendung des resultierenden kombinierten Signals zur Ansteuerung des optischen Senders.

2. Das Verfahren gemäß dem vorherigen Anspruch, worin das erste elektronische Signal und das zweite elektronische Signal mit einer Leistungsaddierstufe kombiniert werden.

3. Das Verfahren gemäß Anspruch 1, worin das erste elektronische Signal und das zweite elektronische Signal mit einem Richtkoppler kombiniert werden.

4. Das Verfahren gemäß Anspruch 1, worin eine Spitzenfrequenz des Entzerrers in Übereinstimmung mit der Verzögerung des verzögerten Signals eingestellt wird.

5. Das Verfahren gemäß Anspruch 1, worin ein Grad der Signalanhebung des Entzerrers in Übereinstimmung mit dem Grad der Dämpfung eingestellt wird.

6. Das Verfahren gemäß Anspruch 1, worin die Aufteilung durch einen Differenzverstärker durchgeführt wird.

7. Ein Schaltkreis zur elektronischen Entzerrung des Frequenzgangs eines optischen Senders, der folgendes umfasst:
- Einen Verteiler, der ein elektronisches Signals in ein erstes elektronisches Signal und ein zweites elektronisches Signal aufteilt,
- Mittel zur Verzögerung eines der ersten elektronischen Signale oder zweiten elektronischen Signale,
- Mittel zur Kombination des ersten elektronischen Signals und des zweiten elektronischen Signals, wobei ein Signal gedämpft wird und ein Signal verzögert wurde,
- Der optische Sender, der durch das kombinierte Signal moduliert wird.

8. Der Schaltkreis gemäß dem vorherigen Anspruch, worin das Mittel zur Kombination des ersten elektronischen Signals und des zweiten elektronischen Signals eine Leistungsaddierstufe oder ein Richtkoppler ist.

9. Der Schaltkreis gemäß Anspruch 7, worin eine Spitzenfrequenz des Entzerrers mit der Verzögerung des verzögerten Signals eingestellt wird, und/oder worin ein Grad der Signalanhebung des Entzerrers mit dem Grad der Dämpfung eingestellt wird.

10. Der Schaltkreis gemäß Anspruch 7, worin der Verteiler ein Differenzverstärker ist.

11. Der Schaltkreis gemäß Anspruch 7, worin das Mittel zur Verzögerung eines der ersten elektronischen Signale oder der zweiten elektronischen Signale eine elektronische Verzögerungsleitung ist, die auf dem Chip zusammen mit einem Differenzverstärker integriert ist.

12. Ein Apparat zur elektronischen Entzerrung eines optischen Senders, der einen Schaltkreis gemäß einem oder mehreren der Ansprüche 7 bis 12 enthält.

## Revendications

1. Procédé pour l'égalisation électronique de la réponse en fréquence d'un émetteur optique, **caractérisé par** les étapes consistant à
- diviser un signal électronique en un premier signal électronique (n) et un second signal électronique (p),
- retarder l'un dudit premier signal électronique (n)
ou dudit second signal électronique (p),
- combiner ledit premier signal électronique (n) et ledit second signal électronique (p), où un signal est atténué, et un signal a été retardé,
- utiliser le signal combiné qui en résulte pour commander l'émetteur optique.

2. Procédé selon la revendication précédente, dans lequel ledit premier signal électronique et ledit second signal électronique sont combinés par un combinateur de puissance.

3. Procédé selon la revendication 1, dans lequel ledit premier signal électronique et ledit second signal électronique sont combinés par un coupleur directif.

4. Procédé selon la revendication 1, dans lequel une fréquence de crête de l'égalisateur est ajustée conformément au retard du signal retardé.

5. Procédé selon la revendication 1, dans lequel une quantité de correction des fréquences élevées de l'égalisateur est ajustée conformément au degré d'atténuation.

6. Procédé selon la revendication 1, dans lequel la division est effectuée par un amplificateur différentiel.

7. Circuit pour l'égalisation électronique de la réponse en fréquence d'un émetteur optique, comprenant
- un diviseur divisant un signal électronique en un premier signal électronique et un second signal électronique,
- des moyens permettant de retarder l'un dudit premier signal électronique ou dudit second signal électronique,
- des moyens permettant de combiner ledit premier signal électronique et ledit second signal électronique, dans lequel un signal est atténué et un signal a été retardé,
- l'émetteur optique étant modulé par ledit signal combiné.

8. Circuit selon la revendication de circuit précédente, dans lequel les moyens permettant de combiner ledit premier signal électronique et ledit second signal électronique sont un combinateur de puissance ou un coupleur directif.

9. Circuit selon la revendication 7, dans lequel une fréquence de crête de l'égalisateur est ajustée au moyen du retard dudit signal retardé et/ou dans lequel une quantité de correction des fréquences élevées est ajustée au moyen du degré d'atténuation.

10. Circuit selon la revendication 7, dans lequel le diviseur est un amplificateur différentiel.

11. Circuit selon la revendication 7, dans lequel les moyens permettant de retarder l'un dudit premier signal électronique ou dudit second signal électronique est une ligne à retard électronique intégrée dans une puce avec un amplificateur différentiel.

12. Dispositif pour l'égalisation électronique d'un émetteur optique, comprenant un circuit selon l'une ou plusieurs des revendications 7 à 12.
